# EUROPÄISCHE PATENTANMELDUNG

(11) **EP 1 582 770 A2**
(43) Veröffentlichungstag der Anmeldung: **05.10.2005**
(21) Anmeldenummer: 05005907.0
(22) Anmeldetag: 17.03.2005
(51) Int. Cl.: F16H 35/10

(54) **Mechanischer Drehmomenten-Abschalter**

(30) Priorität: 01.04.2004 DE 102004016143
(71) Anmelder: HONEYWELL AG, 71101 Schönaich (DE)
(72) Erfinder: Kluth, Hans-Ulrich, 71093 Weil im Schönbuch (DE); Müller, Wolfgang, 71101 Schönaich (DE)
(74) Vertreter: TBK-Patent

(57) **Zusammenfassung**

Die Erfindung betrifft einen mechanischer Drehmoment-Abschalter mit einer Abschaltanordnung (13), die in den Drehmomentfluss zwischen einem Antriebsmotor (10) und einem angetriebenen Element (14) zwischengeschaltet ist. Die Abschaltanordnung weist ein Betätigungsglied (26) auf, das in Richtung einer Ruheposition vorgespannt/vorspannbar ist und bei Erreichen und/oder Überschreiten eines bestimmten übertragenen Drehmoments entgegen der Vorspannung mit einem Auslöser in Kontakt bringbar ist, um den Antriebsmotor abzuschalten oder auszukuppeln. Erfindungsgemäß ist eine Justiereinrichtung zur Justierung/Einstellung der Vorspannung vorgesehen.

## Beschreibung

### Stand der Technik

Die Erfindung betrifft einen mechanischen Drehmomenten-Abschalter gemäß dem Oberbegriff des Patentanspruchs 1.

Mechanische Drehmomenten-Abschalter sind im Stand der Technik hinreichend bekannt. Derartige Anordnungen werden zur Abschaltung von Antriebsmotoren verwendet, wenn die vom Antriebsmotor auf ein Abtriebsrad aufgebrachten Drehmomente eine vorgegebene Schwelle (vorbestimmter Grenzwert) überschreiten.

Allgemein sind diese Anordnungen derart realisiert, dass zwischen einer Motorabtriebswelle, welche gegebenenfalls noch von einem Getriebe über-/untersetzt sein kann, und einem angetriebenen Rad oder Welle eine Mehrzahl von Wellen, Achsen und Getrieberädern so angeordnet sind, dass bei Überschreitung eines vorgegebenen Drehmoments ein Hebel in Rotation versetzt wird, der bei einer bestimmten Rotationsposition (bei einem vorbestimmten Rotationsweg) einen Schalter zur Unterbrechung der Stromzufuhr zum Motor betätigt. Zur Einstellung des maximal zulässigen Drehmoments wirken die Wellen, Achsen und Getrieberäder auf den Hebel, der an dem freien Ende einer Feder anliegt, welche der Rotationsbewegung des Hebels entgegenwirkt. Wird die jeweilige Federkraft der Feder überschritten, kann der Hebel auf den Schalter wirken, der dann bei Betätigung zur Abschaltung des Motors führt.

Zur Befestigung der Feder im Gehäuse sind derartige Federn in aller Regel gebogen oder abgewinkelt ausgebildet und mit dem kurzen ihrer Schenkel in das Gehäuse eingeklemmt. Sehr beliebt in diesem Zusammenhang sind beispielsweise v-förmig ausgebildete Federn. Auf diese Weise soll gewährleistet werden, dass die entsprechend gebogene und in damit erzwungener Position eingespannte Feder immer exakt die gleiche aktive Länge und damit die gleiche Federkraft aufweist. Die Verwendung derartiger Federn ist jedoch in mehrfacher Hinsicht nachteilig.

So hat die Erfinderin festgestellt, dass exakte Federkräfte, welche dem jeweiligen Drehmoment entgegenwirken, nur unter erheblichem Aufwand bereitgestellt werden können. Dies ist darauf zurückzuführen, dass beim fertigungsmäßigen Biegen oder Abwinkeln derartiger Federn hohe Anforderungen erfüllt werden müssen, um bei den einzelnen Federn eine immer gleiche Kraft dem jeweiligen Drehmoment entgegen zu bringen. In anderen Worten ausgedrückt, hat die Erfinderin erkannt, dass Biegebearbeitungen von Federn dieser Gattung eine von Feder zu Feder unterschiedliche Veränderung der Federsteifigkeit und damit der entsprechend erreichten Federkraft bewirken können, was nur schwer und mit großem Fertigungsaufwand beherrschbar ist. Da darüber hinaus zum Betrieb verschiedener Anwendungen die Abschaltmomente unterschiedlich sein können, sind eine Mehrzahl von unterschiedlichen Federn vorzuhalten. Dies erhöht den Lager- und Logistikaufwand erheblich.

### Kurzbeschreibung der Erfindung

Daher liegt der Erfindung die Aufgabe zu Grunde, einen mechanischen Drehmomenten-Abschalter dieser Gattung anzugeben, der für eine Vielzahl von gleichen wie auch unterschiedlichen Anwendungsfällen eine immer zuverlässige und korrekte Abschaltung des Motors oder dessen Auskupplung realisiert.

Hierbei soll u.a. ein Vorteil erzielt werden, dass der erfindungsgemäße Drehmoment-Abschalter einen einfachen Aufbau erhält und zur Realisierung auch verschiedener Abschaltmomente einfach justiert werden kann.

Die vorstehende Aufgabe wird durch einen mechanischen Dehmomenten-Abschalter mit den Merkmalen gemäß dem Patentanspruch 1 gelöst. Demzufolge besteht der Kern der Erfindung darin, eine Justiervorrichtung am Drehmomenten-Abschalter anzuordnen, die ein Justieren/Einstellen vorzugsweise der aktiven Länge einer Feder und damit der erzielten Federkraft ermöglicht.

Eine vorteilhafte Ausgestaltung der Erfindung sieht dabei vor, dass die Feder als eine gerade, d.h. nicht gebogene oder abgekantete Feder ausgebildet ist, die lediglich an einem ihrer Enden mit dem Gehäuse verbunden wird.

Vorteilhaft ist ferner die Ausbildung der mit dem einen Ende der geraden oder auch einer gebogenen Feder zusammenwirkenden Aufnahme am Gehäuse des Drehmomenten-Abschalters als Justiervorrichtung selbst, in dem durch unterschiedliche Einstecktiefen der Feder an der Aufnahme (wodurch die Aufnahme bezüglich eines die Feder betätigenden Glieds quasi vor- und zurückgesetzt wird) und/oder durch zusätzlich anbringbare oder hinsichtlich ihrer Position veränderbare Anlagekanten (Sollbiegestellen) für die Feder, die aktive Länge der Feder eingestellt werden kann.

Die Erfindung wird nachstehend anhand eines bevorzugten Ausführungsbeispiels unter Bezugnahme auf die begleitenden Figuren näher erläutert:
- Figur 1: zeigt einen Drehmoment-Abschalter im Seitenschnitt und
- Figur 2: einen Drehmoment-Abschalter in Draufsicht.

### Wege zum Ausführen der Erfindung

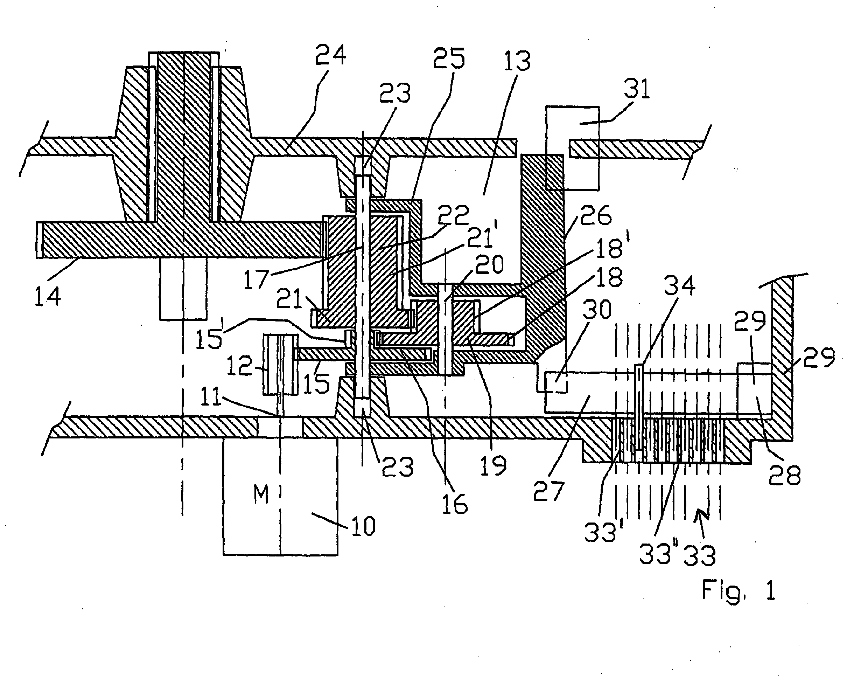

Die in Figur 1 gezeigte Anordnung gemäß dem bevorzugten Ausführungsbeispiel der Erfindung weist einen Motor 10 auf, an dessen Motorwelle 11 ein Ritzel 12 angesetzt ist. Wird der Motor 10 in Drehung versetzt, setzt sich diese über eine mechanische Abschaltanordnung 13, auf die noch gesondert eingegangen wird, auf ein angetriebenes Rad 14 (oder Welle) fort. Entsprechend der Drehrichtung des Motors 10 kann dann über das angetriebene Rad 14 beispielsweise ein Ventil, Hahn oder Schieber (nicht dargestellt) auf- oder zugefahren werden.

Nur der Vollständigkeit halber sei darauf hingewiesen, dass zwischen dem Motor 10 und dem Ritzel 12 zur Über- bzw. Untersetzung der Motordrehzahl noch ein Getriebe (nicht dargestellt) optional angeordnet sein kann.

Zur Realisierung der Drehmoment-Abschaltung steht das Ritzel 12 der Anschaltanordnung 13 mit der ersten Stufe 15 eines Zahnrades 16 im Eingriff, welches um eine erste Achse 17 drehbar gelagert ist. Die zweite Stufe 15' des Zahnrades 16, welche mit der ersten Stufe 15 einstückig ist, jedoch gegenüber der ersten Stufe 15 einen geringeren Durchmesser hat, greift in die erste Stufe 18 eines Zahnrades 19 ein, welches um eine zweite Achse 20 drehbar angeordnet ist. Die zweite Stufe 18' des Zahnrades 19, welches ebenfalls wie beim Zahnrad 16 mit der ersten Stufe 18 einstückig verbunden ist, hat gegenüber der ersten Stufe 18 einen verringerten Durchmesser.

Zur Übertragung der Drehkräfte auf das angetriebene Rad 14 steht die zweite Stufe 18' des Zahnrades 19 mit der ersten Stufe 21 eines Zahnrades 22 in Wirkverbindung, während die zweite Stufe 21', welche mit der ersten Stufe 21 einstückig verbunden ist und gegenüber der ersten Stufe 21 einen geringeren Durchmesser hat, in das angetriebene Rad 14 eingreift und dieses antreibt.

Nur der Vollständigkeit halber sei darauf hingewiesen, dass gemäß dem vorliegenden Ausführungsbeispiel das Zahnrad 22 ebenfalls mit der Achse 17 nicht drehfest verbunden ist und dass die Achse 17 drehbar in Aufnahmebuchsen oder Bohrungen 23 eines Gehäuses 24 der Abschaltanordnung 13 gelagert ist. An dieser Stelle sei jedoch auch erwähnt, dass die vorstehende Konstruktion auch abgewandelt sein kann, solange gewährleistet ist, dass das Zahnrad 16 und das Zahnrad 22, welche auf der gleichen Achse 17 gelagert sind bzw. deren Rotationsachsen auf gleicher Linie angeordnet sind, relativ zueinander drehen können.

Ferner ist mit der Achse 17 ein Drehgehäuse 25 drehbar verbunden, welches bei einer Rotation der Achse 17 ebenfalls in Drehrichtung der Achse 17 gedreht wird. Alternativ zu dieser Ausgestaltung kann das Drehgehäuse 25 natürlich auch drehbar auf der Achse 17 gelagert sein, um in jedem Fall eine Relativdrehung zu den beiden Zahnrädern 16 und 22 zu ermöglichen.

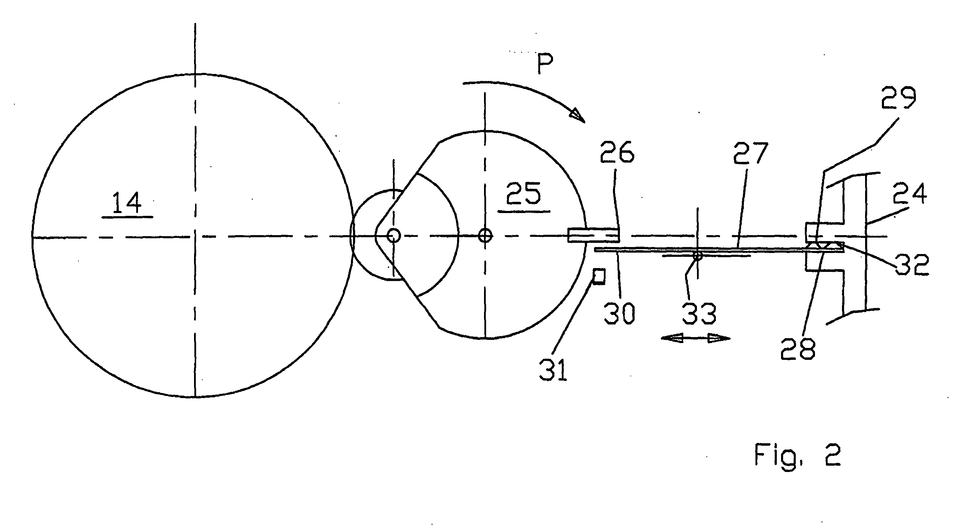

In das Drehgehäuse 25 ist die Achse 20, welche das Zahnrad 19 lagert, in einem Parallelabstand zur Achse 17 vorzugsweise durch Einpressen eingesetzt. Schließlich ist auf einer der Achse 17 abgewandten Seite des Drehgehäuses 25 noch ein Hebel (Betätigungsglied) 26 angeordnet, der vorliegend vorzugsweise einstückig mit dem Drehgehäuse 25 ausgebildet ist. Dieser Hebel 26 liegt im Ruhezustand der Anordnung an dem freien Ende 30 einer Feder, vorliegend einer geraden Blattfeder 27 an, deren Ausbildung in Figur 2 näher gezeigt ist.

Deutlich ist der Figur 2 zu entnehmen, dass die Blattfeder 27 vollständig gerade ausgebildet ist, d.h. auch in ihren Endbereichen keine Abkantungen oder Biegungen aufweist und lediglich mit ihrem einen Ende 28 in einem Schlitz 29 des Gehäuses 24 befestigt ist. In der Fig. 2 ist dabei nur ein einziger Schlitz 29 gezeigt. Es können aber auch eine Mehrzahl von parallelen Schlitzen zur Ausbildung der Federaufnahme vorgesehen sein, die jedoch bezüglich des Hebels 26 unterschiedlich beabstandet sind so dass der Kontaktpunkt zwischen Hebel 26 und Feder 27 längs der Feder 27 wandert und damit die aktive Länge des Feder sich verändert.

Wird nun gemäß Figur 1 die Motorwelle 11 des Motors 10 in Drehung versetzt, setzt sich diese Rotation über die Zahnräder 16, 19, 22 auf das angetriebene Rad 14 fort und kann dort beispielsweise zum Auf- oder Zufahren eines Ventils, Hahns oder Schiebers (nicht dargestellt) verwendet werden. Soll sichergestellt werden, dass die jeweiligen Absperrvorrichtungen (Ventile, etc.) sicher schließen, ist ein bestimmtes Drehmoment erforderlich. Soll aber ausgeschlossen werden, dass bei Erreichen einer der Endstellungen der Absperrvorrichtungen Beschädigungen des Motors 10 und/oder auch der jeweiligen Absperrvorrichtung entstehen, ist es notwendig, eine entsprechende Abschaltvorrichtung für den Motor 10 zu realisieren, die dann wirksam wird, wenn ein definiertes Drehmoment, welches ein sicheres Schließen der jeweiligen Absperrvorrichtung erlaubt, überschritten wird.

Befindet sich demzufolge die Absperrvorrichtung in einer der genannten Endstellungen, wird das angetriebene Rad 14 blockiert. Dies bewirkt, dass die Antriebskräfte des Motors 10 auf das freidrehende Zahnrad 16 übertragen und von dort auf das Zahnrad 19 übertragen werden. Dieses dreht sich dann mit der zweiten Stufe 18' um die erste Stufe 21 des durch die Endstellung der Absperrvorrichtung feststehenden bzw. festgehaltenen Zahnrades 22. Dadurch wird das Drehgehäuse 25 in Rotation versetzt, wobei der daran angeordnete Hebel 26 gegen das frei vorragende Ende 30 der Feder 27 gedrückt wird.

Diese Drehung des Drehgehäuses 25 ist durch den Pfeil in Figur 2 angedeutet. Mit zunehmendem Drehmoment in Pfeilrichtung weicht das freie Ende 30 der Feder 27 dem Hebel 26 immer mehr aus. Die Abschaltung des Motors 10 oder dessen Auskupplung wird schließlich dadurch erreicht, dass bei einer definierten Biegung des freien Endes 30 der Feder 27 der Hebel 26 einen angedeuteten Schalter 31 umlegt, der dann die Stromversorgung (nicht dargestellt) des Motors 10 unterbricht und/oder eine Kupplung betätigt. Ist die Stromversorgung unterbrochen, wird über die Rückstellkräfte der Feder 27 das Drehgehäuse 25 wieder in die in Figur 2 gezeigte Ausgangstellung verbracht.

Da bei der erfindungsgemäßen Ausbildung im Gegensatz zum Stand der Technik ausschließlich gerade Federn 27 verwendet werden, kann ohne großen Aufwand jederzeit eine gleiche, dem Hebel 26 entgegenwirkende Federkraft auch bei einer Vielzahl von Federn realisiert werden. Zur Vermeidung von Beeinflussungen der dem Hebel 26 entgegenstehenden Federkraft sollte das feste Ende 28 möglichst in das Gehäuse 24 eingepresst oder, so wie in Figur 2 gezeigt, mit einem separaten Riegel 32 aus gewelltem Federmaterial in den Schlitz 29 des Gehäuses 24 befestigt sein. Auch ist es möglich, die Feder 27 mit einem Keil (nicht dargestellt) in dem Schlitz 29 zu befestigen.

Nur der Vollständigkeit halber sei darauf hingewiesen, dass die in den Figuren 1 und 2 dargestellte mechanische Drehmoment-Abschaltung bei entsprechender Fortbildung der Erfindung nicht nur für eine Drehrichtung des Drehgehäuses 25, sondern auch für beide Drehrichtungen realisiert sein kann.

Um Sicherheit bei Verwendung nur einer für alle Fälle identischen Feder 27 gegenüber verschieden großen Drehmomenten zu geben, ist das Gehäuse 24 mit einer Mehrzahl von Bohrungen 33 versehen, wobei in eine dieser Bohrungen 33 ein Stift 34 eingesetzt ist. Wie der Darstellung gemäß Figur 2 entnehmbar ist, liegt dieser Stift 34 zwischen dem freien Ende 30 und dem festen Ende 28 der Feder 27 an und bildet so eine Biegestelle oder Anschlag für die Feder 27. Hierdurch wird die aktive Länge der Feder quasi verkürzt. Soll ausgehend von Figur 1 der Hebel 26 erst bei einem größeren Drehmoment den Schalter 31 zur Endabschaltung des Motors 10 betätigen, ist der Stift 34 in die Bohrung 33' einzusetzen, wodurch eine Verkürzung der aktiven Länge der Feder erfolgt. Zum Ansprechen des Schalters 31 bei geringeren Drehmomenten ist der Stift 34 ausgehend von seiner in Figur 1 gezeigten Position beispielsweise in die Bohrung 33" einzusetzen, um hierdurch eine Verlängerung der aktiven Länge der Feder zu erreichen.

Durch die Positionsänderung des Stifts 34 längs der Feder 27 wird sichergestellt, dass eine erfindungsgemäße Steuer- bzw. Regeleinrichtung ohne großen Aufwand für eine Vielzahl von Absperrvorrichtungen mit unterschiedlichen Anforderungen an das maximale Drehmoment verwendet werden können.

Anstelle der Bohrungen 33 kann dann in einer Weiterbildung der Erfindung der Stift 34 oder ein entsprechendes, eine Biegekante ausbildendes Element auch auf einem Schlitten (nicht dargestellt) angeordnet sein, welcher zur Realisierung der verschiedenen Abschaltbedingungen in Richtung des in Figur 2 gezeigten Doppelpfeils kontinuierlich oder gerastet verschoben und in der gewünschten Position verrastet werden kann.

Schließlich sei noch darauf hingewiesen, dass der Vorteil, der sich durch den positionsveränderbaren Stift 34 ergibt, auch eigenständig, d. h. bei nicht geraden Federn 27 genutzt werden kann.

Die Erfindung betrifft einen mechanischer Drehmoment-Abschalter mit einer Abschaltanordnung, die in den Drehmomentfluss zwischen einem Antriebsmotor und einem angetriebenen Element zwischengeschaltet ist. Die Abschaltanordnung weist ein Betätigungsglied auf, das in Richtung einer Ruheposition vorgespannt/vorspannbar ist und bei Erreichen und/oder Überschreiten eines bestimmten übertragenen Drehmoments entgegen der Vorspannung mit einem Auslöser in Kontakt bringbar ist, um den Antriebsmotor abzuschalten oder auszukuppeln. Erfindungsgemäß ist eine Justiereinrichtung zur Justierung/Einstellung der Vorspannung vorgesehen.

## Patentansprüche

1. Mechanischer Drehmoment-Abschalter mit einer Abschaltanordnung (13), die in den Drehmomentfluss zwischen einem Antriebsmotor (10) und einem angetriebenen Element (14) zwischengeschaltet ist und ein Betätigungsglied (26) aufweist, das in Richtung einer Ruheposition vorgespannt/vorspannbar ist und bei Erreichen und/oder Überschreiten eines bestimmten übertragenen Drehmoments entgegen der Vorspannung mit einem Auslöser in Kontakt bringbar ist (Betätigungsposition), um den Antriebsmotor (10) abzuschalten oder auszukuppeln, **gekennzeichnet durch** eine Justiereinrichtung zur Justierung/Einstellung der Vorspannung.

2. Mechanischer Drehmoment-Abschalter nach Anspruch 1, **dadurch gekennzeichnet, dass** die Vorspannung durch eine Feder, vorzugsweise eine Blattfeder (27) erreicht wird, welche an ihrem einen Ende in einem Gehäuse (24) fixiert oder fixierbar ist und die Justiervorrichtung eine Änderung der aktiven Länge der Feder (27) bewirkt.

3. Mechanischer Drehmoment-Abschalter nach Anspruch 1 oder 2, **dadurch gekennzeichnet, dass** die Feder eine ungebogene Blattfeder (27) ist.

4. Mechanischer Drehmoment-Abschalter nach einem der vorstehenden Ansprüche, **dadurch gekennzeichnet, dass** die Justiervorrichtung einen Mechanismus zur Festlegung einer Stelle der Feder bildet, ab welcher die Feder durch das Betätigungsglied (26) elastisch verformbar ist.

5. Mechanischer Drehmoment-Abschalter nach einem der vorstehenden Ansprüche, **dadurch gekennzeichnet, dass** die Justiervorrichtung einen Stift, Vorsprung (34) oder dergleichen, eine Biegekante für die die Vorspannung erzeugende Blattfeder (27) bildendes Bauteil aufweist, wobei der Stift bzw. das entsprechende Bauteil (34) längs der Blattfeder (27) unterschiedlich positionierbar ist.

6. Mechanischer Drehmoment-Abschalter nach Anspruch 5 **dadurch gekennzeichnet, dass** der Stift bzw. das entsprechende Bauteil (34) in längs der Blattfeder (27) beabstandeten Bohrungen (33, 33', 33") oder Aufnahmen im Gehäuse fixierbar ist oder der Stift (34) oder eine entsprechende Biegekante auf einem in Längsrichtung der Blattfeder (27) verschiebbaren und fixierbaren Schlitten angeordnet/ausgebildet ist.

7. Mechanischer Drehmoment-Abschalter nach Anspruch 2, **dadurch gekennzeichnet, dass** die Justiervorrichtung ein verstellbarer Vorspannmechanismus ist, mit dem die Feder in Richtung Ruheposition des Betätigungsglieds zur Erzeugung unterschiedlich einstellbarer Federkräfte vorspannbar ist.

8. Mechanischer Drehmoment-Abschalter nach einem der vorstehenden Ansprüche, **dadurch gekennzeichnet, dass** die Abschaltanordnung (13) ein Drehgehäuse (25) hat, welches um eine Achse (17) drehbar gelagert ist und als Aufnahme eines vom Motor (10) direkt/indirekt angetriebenen Zahnrads (19) dient, das mit einem auf der Achse (17) gelagerten sowie auf das angetriebene Element (14) ein Drehmoment abgebenden Zahnrad (22) in Kämmeingriff ist.

9. Mechanischer Drehmoment-Abschalter nach Anspruch 8, **dadurch gekennzeichnet, dass** das Drehgehäuse (25) das Betätigungsglied (26) aufweist.
